# EUROPÄISCHE PATENTSCHRIFT

(11) **EP 1 674 192 B1**
(45) Veröffentlichungstag und Bekanntmachung des Hinweises auf die Patenterteilung: **05.08.2009**
(21) Anmeldenummer: 05027163.4
(22) Anmeldetag: 13.12.2005
(51) Int. Cl.: B23K 26/34, B29C 67/00, B22F 3/105

(54) **Verfahren zur Herstellung eines Leichtbauelements aus Hohlkugeln**
Process for manufacturing a light-weight part from hollow spheres
Procédé pour la préparation d'éléments de construction légers à partir de sphères creuses

(30) Priorität: 23.12.2004 DE 102004063489
(43) Veröffentlichungstag der Anmeldung: 28.06.2006
(73) Patentinhaber: Greiwe, Reinhard, 97892 Kreuzwertheim (DE)
(72) Erfinder: Greiwe, Reinhard, 97892 Kreuzwertheim (DE)
(74) Vertreter: von den Steinen, Axel

(56) Entgegenhaltungen:
- DE-A1-5102004 003 48

## Beschreibung

Die Erfindung betrifft ein Verfahren zur Herstellung eines Leichtbauelements aus Hohlkugeln nach dem Oberbegriff des Anspruchs 1.

Herstellung und Eigenschaften von Hohlkugeln, wie sie für das gattungsgemäße Verfahren eingesetzt werden können, sind beispielsweise in der EP 0 300 543 A1 und der US 4,917,857 beschrieben. Dabei wird auf einen kugelförmigen Kern aus einem geschäumten Polymer eine wässrige Suspension eines metallischen oder keramischen Pulvers mit einem organischen Bindemittel aufgebracht und bei einer Temperaturbehandlung das den Kern bildende Polymer pyrolisiert, wobei die gasförmigen Komponenten entweichen und ein sogenannter Grünkörper mit ausreichender Stabilität erhalten wird. Dieser Grünkörper wird nachfolgend weiter erwärmt, um auch die bis dahin verbliebenen organischen Bestandteile des Bindemittels auszutreiben und die Pulverteilchen miteinander zu einer geschlossenen Kugelschale (Stützschale) zu versintern.

Die so erhaltenen Hohlkugeln mit einer Stützschale können für verschiedene Anwendungstechnologien eingesetzt werden. Zur Herstellung von Leichtbauelementen beschreibt die DE 100 46 174 C2 ein Verfahren, bei dem eine Vielzahl von Hohlkugeln in einer Form zu einem Grünling verpresst werden, um die gewünschte Geometrie des Leichtbauelements durch die Abformung im Grünling abzubilden. Der Grünling wird nachfolgend in einem Ofen durch Wärmezufuhr gesintert, so dass sich die Stützschalen der Hohlkugeln in den aneinanderliegenden Kontaktbereichen stoffschlüssig miteinander verbinden. Auf diese Weise erhält das Leichtbauelement die notwendige Formstabilität. Dieses bekannte Verpressen von Grünlingen und anschließende Sintern des Bauelements weist verschiedene Nachteile auf. Durch das bei der Grünlingherstellung erforderliche Verpressen können unerwünschte Verformungen an den Hohlkugeln auftreten. Außerdem erfordert das Sintern der Grünlinge Öfen, deren Ofenkammer größer als das entsprechende Bauteil ist. Auf diese Weise wird die Bauteilgröße abhängig von dem zur Verfügung stehenden Ofen begrenzt. Weiterhin sind nicht alle Materialien dazu geeignet die Hohlkugeln durch kollektives Verpressen und anschließendes Brennen aneinander zu befestigen. Insbesondere Hohlkugeln aus Metalloxid können mit diesem Verfahren nicht verarbeitet werden.

Ein Schichtaufbauendes Verfahren zur Herstellung eines dreidimensionalen Gegenstandes aus Partikeln in Form, von Hohlkugeln ist aus DE-A-102 004 003 485 bekannt.

Ausgehend von diesem Stand der Technik ist es deshalb Aufgabe der vorliegenden Erfindung ein neues Verfahren zur Herstellung von Leichtbauelementen aus Hohlkugeln vorzuschlagen, das die Nachteile des bekannten Stands der Technik überwindet.

Diese Aufgabe wird durch ein Verfahren nach der Lehre des Anspruchs 1 gelöst.

Vorteilhafte Verfahrensvarianten sind Gegenstand der Unteransprüche.

Das erfindungsgemäße Verfahren beruht auf dem Grundgedanken, dass die das Leichtbauelement bildenden Hohlkugeln nicht mehr gemeinsam als Kollektiv verpresst und insgesamt erhitzt werden, sondern dass die Hohlkugeln während ihrer lagerichtigen Anordnung, die sich aus der Geometrie des herzustellenden Bauelements ergibt, jeweils einzeln bzw. in einzelnen Gruppen in einem Fixierschritt selektiv erhitzt werden. Durch die selektive Erhitzung der einzelnen Hohlkugeln bzw. Gruppen von Hohlkugeln während des Fixierschritts werden immer nur ganz bestimmte Hohlkugeln im Bauelement fixiert, so dass sich das Bauelement durch die mehrfache Wiederholung des Fixierschritts schrittweise aufbaut.

Durch diese schrittweise Erhitzung und Fixierung der das Bauelement bildenden Hohlkugeln kann die Wärmebelastung des Bauteils während der Herstellung extrem reduziert werden. Außerdem kann das Verpressen des Grünlings entfallen, so dass dann eine Verformung der Hohlkugeln während der Herstellung bzw. eine signifikante mechanische Belastung der Hohlkugeln ausgeschlossen ist.

Durch welchen physikalischen bzw. chemischen Effekt die Hohlkugeln durch die selektive Erhitzung miteinander verbunden werden, ist grundsätzlich beliebig. Insbesondere ist es jedoch denkbar, dass die Hohlkugeln durch die Erhitzung miteinander verschweißt, verlötet, verklebt und/oder versintert werden.

Zu Beginn des Herstellungsprozesses, d.h. vor Durchführung des ersten Fixierschritts, sind alle Hohlkugeln lose und nicht miteinander verbunden. Um die Hohlkugeln auch zu Beginn des Herstellungsprozesses lagerichtig und prozesssicher anordnen zu können, ist es deshalb besonders vorteilhaft, wenn ein Trägerelement eingesetzt wird. Auf diesem Trägerelement kann beispielsweise die unterste Schicht der Hohlkugeln abgelegt und mit den in der gleichen Schicht befindlichen Hohlkugeln verbunden werden. Nach Bildung der untersten Schicht des Bauteils können die weiteren Schichten durch Ablegen weiterer Hohlkugeln auf den jeweils darunter liegenden Hohlkugelschichten hergestellt werden.

Da die Bauteilgeometrie durch geeignete Anordnung der Hohlkugeln und anschließende Fixierung sehr flexibel herstellbar ist, sind insbesondere Trägerelemente geeignet, die unabhängig von der Gestaltung, insbesondere unabhängig von der Form, des herzustellenden Leichtbauelements ausgebildet sind. Auf diese Weise können auf immer gleichen Trägerelementen Leichtbauelemente völlig unterschiedlicher Geometrie hergestellt werden. Insbesondere sind beispielsweise wannenförmige oder plattenförmige Werkstückträger als Trägerelemente geeignet, wobei die Hohlkugeln auf der Oberseite bzw. auf dem Boden des Werkstückträgers abgelegt werden.

Alternativ zu Trägerelementen, die nur während des Herstellungsprozesses zur Lagerung der Hohlkugeln dienen, können auch Trägerelemente Verwendung finden, die während des Herstellungsprozesses zum Bestandteil des Leichtbauelements werden. Dies bedeutet mit anderen Worten, dass das Trägerelement während des Herstellungsprozesses mit den Hohlkugeln verbunden wird und dadurch zum integralen Bestandteil des Leichtbauelements wird.

Auf welche Weise die Hohlkugeln während des Herstellungsprozesses lagerichtig angeordnet werden, ist grundsätzlich beliebig. Nach einer ersten Verfahrensalternative wird dazu ein Zuführgerät verwendet, durch dessen Relativbewegung zum Trägerelement die Hohlkugeln lagerichtig zugeführt und angeordnet werden. Dabei ist es insbesondere vorteilhaft, wenn das Trägerelement ortsfest angeordnet ist und nur das Zuführgerät relativ zu diesem ortsfesten Trägerelement verfahren wird, da dadurch eine unerwünschte Verschiebung von auf dem Trägerelement abgesetzten aber noch nicht fixierten Hohlkugeln ausgeschlossen ist.

Mit welcher Art von Konstruktion von Zuführgerät die Hohlkugeln positioniert werden, ist grundsätzlich beliebig. Besonders geeignet sind sogenannte Lochmasken oder Schlitzbleche, mit denen die Hohlkugeln einzeln bzw. zeilenweise positioniert werden können.

Alternativ zum Anordnen der Hohlkugeln mittels eines relativ beweglichen Zuführgeräts, können die Hohlkugeln auch mit einem als Schütteinrichtung ausgebildeten Zuführgerät als Schüttgut auf das Trägerelement aufgeschüttet werden. Beispielsweise können die Hohlkugeln in einer Überschussmenge auf das Trägerelement bzw. auf die bereits fixierten Hohlkugeln aufgeschüttet werden und anschließend die Hohlkugeln abgestriffen werden, die über ein bestimmtes Niveau überstehen. Auf diese Weise kann eine Schicht von lose liegenden Hohlkugeln auf dem darunter liegenden Trägerelement bzw. auf dem darunter liegenden Körper aus bereits fixierten Hohlkugeln hergestellt werden. Durch selektive Erhitzung der Hohlkugeln in der Schicht aus losen Hohlkugeln kann dann die gewünschte Bauteilgeometrie in dieser Schicht erzeugt werden. Alle nicht durch selektive Erhitzung fixierten Hohlkugeln dieser Schicht werden anschließend wieder entfernt, beispielsweise abgesaugt, so dass die nächst höhere Schicht anschließend aufgeschüttet und durch selektive Erhitzung ortsabhängig fixiert werden kann.

Welchen Aufbau die Hohlkugeln haben, ist grundsätzlich beliebig. Der Kern der Hohlkugeln kann aus einem expandierten Werkstoff, insbesondere expandiertem Polystyrol, expandiertem Polypropylen oder expandiertem Polyethylen, bestehen. Dabei ist es allerdings denkbar, dass der expandierte Werkstoff während des Herstellungsprozesses zur Herstellung der Hohlkugeln zerstört, beispielsweise pyrolisiert wird.

Die Stützschale der Hohlkugeln kann vorzugsweise aus Metall, insbesondere Schwermetall, Buntmetall, Stahl, insbesondere Edelstahl bestehen. Alternativ dazu ist es auch denkbar, dass Metalloxide, Keramiken oder Kunststoffe zur Herstellung der Stützschale der Hohlkugeln eingesetzt werden.

Auf welche Weise die selektive Erhitzung der Hohlkugeln bewirkt wird, ist grundsätzlich beliebig. Besonders geeignet als Energiequelle zur selektiven Erhitzung sind Laserlichtquellen (Laser). Der von diesen Lasern erzeugte Laserlichtstrahl kann gezielt auf einzelne Hohlkugeln bzw. auf einzelne Gruppen von Hohlkugeln gerichtet werden, wobei diese Hohlkugeln dann sehr punktgenau erhitzt werden. Durch die hohe Energiedichte des Laserlichtes ist es dabei möglich, einen sehr starken Temperaturgradienten zu erzeugen, so dass die Wärmebelastung des Bauteils insgesamt sehr gering ist. Die vom Laser abgegebene Energiemenge ist dabei so abzustimmen, dass zum einen die erwünschte Fixierung der Stützschalen aneinander bewirkt wird, beispielsweise durch Versintern, und zugleich eine Schädigung der Stützschalen durch zu hohen Wärmeeintrag ausgeschlossen ist.

Um den Laserlichtstrahl flexibel auf die jeweils zu fixierenden Hohlkugeln richten zu können, ist der Einsatz von Umlenkeinrichtungen, insbesondere Umlenkspiegeln oder Umlenkprismen vorteilhaft. Auf diese Weise kann die Laserlichtquelle selbst ortsfest montiert sein, wobei der Laserlichtstrahl durch Stellbewegung der Umlenkeinrichtung auf die jeweils zu fixierenden Hohlkugeln gerichtet wird.

Alternativ zur Verwendung von Laserlicht können die Hohlkugeln auch mittels einer Widerstandsschweißvorrichtung erhitzt werden. Dabei werden in aller Regel Gruppen aus mehreren Hohlkugeln gemeinsam erhitzt. Bei Einsatz einer Widerstandsschweißvorrichtung müssen regelmäßig Hohlkugeln mit elektrisch leitender Stützschale eingesetzt werden.

Entsprechend welcher Geometrie die Hohlkugeln im Leichtbauelement angeordnet sind, ist grundsätzlich beliebig. Besonders vorteilhaft ist es, wenn die Hohlkugeln schichtweise im Leichtbauelement angeordnet sind. Die Aufschichtung der Hohlkugeln erlaubt es, dass die Hohlkugeln jeweils einzelner Schichten jeweils nacheinander in einzelnen Fixierschritten fixiert werden, so dass sich das Leichtbauelement schichtweise von unten nach oben aufbauen lässt.

Weiterhin ist es besonders vorteilhaft, wenn die Hohlkugeln in den einzelnen Schichten zeilenweise nebeneinander angeordnet sind. Auf diese Weise ergibt sich eine kristallähnliche Struktur der Hohlkugeln im Leichtbauelement, woraus sich außerordentlich gleichmäßige Bauteileigenschaften ergeben.

Besonders große Vorteile bietet das erfindungsgemäße Verfahren, wenn Bauteile herzustellen sind, an denen Hohlräume, Ausnehmungen oder Vertiefungen, insbesondere Hinterschneidungen vorzusehen sind. Um diese Bereiche des Bauteils, in denen sich keine Hohlkugeln befinden dürfen, herzustellen, werden nach einer ersten Verfahrensvariante einzelne Hohlkugeln bzw. einzelne Gruppen von Hohlkugeln nach ihrer Ausbringung auf dem Trägerelement bzw. auf den bereits fixierten Hohlkugeln vor ihrer Fixierung wieder entfernt. Die Entfernung der Hohlkugeln kann dabei vorzugsweise mittels einer Absaugeinrichtung erfolgen, die die Hohlkugeln durch Anlegen eines Unterdrucks absaugt. Wurden beispielsweise die zu fixierenden Hohlkugeln einer aufgeschütteten Schicht durch Abfahren mit einem Laserlichtstrahl fixiert, so können die dazwischen liegenden, nicht fixierten Hohlkugeln durch Absaugen entfernt werden, so dass sich dadurch die gewünschte Geometrie mit Hohlräumen, Ausnehmungen oder Vertiefungen ergibt. Die abgesaugten Hohlkugeln können anschließend wieder in das Zuführgerät zurückgefördert werden und in einem der nächsten Positionierschritte am Bauteil positioniert werden.

Alternativ zur Entfernung von nicht fixierten Hohlkugeln können Hohlräume, Ausnehmungen oder Vertiefungen auch dadurch hergestellt werden, dass während des Herstellungsprozesses Platzhalterelemente zwischen den Hohlkugeln angeordnet werden. Je nach Funktion des Bauteils können diese Platzhalterelemente entweder im Bauteil verbleiben, insbesondere wenn dadurch Hohlräume gebildet werden, oder nach vollständiger Fixierung aller das Bauteil bildenden Hohlkugeln aus dem Bauteil entfernt, beispielsweise herausgezogen oder ausgetrieben werden.

Besonders vorteilhaft ist es dabei, wenn die Platzhalterelemente aus einem thermisch austreibbaren Werkstoff, beispielsweise Polystyrol hergestellt sind. Auf diese Weise ist es möglich, dass nach vollständiger Fixierung aller das Bauteil bildenden Hohlkugeln durch entsprechende Wärmebehandlung das Platzhalterelement aus dem Bauteil ausgetrieben wird, so dass anschließend das Vorhandensein des Platzhalterelements nicht mehr feststellbar ist.

Die Platzhalterelemente sollten dabei vorzugsweise die gleiche Geometrie wie die Hohlkugeln aufweisen. Werden beispielsweise kugelförmige Platzhalterelemente verwendet, die den gleichen Durchmesser wie die Hohlkugeln selbst aufweisen, wird auch bei Anordnung der Platzhalterelemente zwischen den Hohlkugeln die kristallartige Struktur nicht gestört, sondern fortgesetzt.

Je nach Material der Hohlkugeln, können diese wahlweise auch unter Schutzgasatmosphäre erhitzt werden, um unerwünschte Stoffumwandlungen in der Stützschale auszuschließen.

Weiterhin ist es möglich, dass die Hohlkugeln vor dem Fixieren durch die selektive Erhitzung mit einer Vorheizeinrichtung vorgeheizt werden, um dadurch einen sanfteren Temperaturgradienten zu ermöglichen.

Einen weiteren Vorteil bietet das erfindungsgemäße Herstellungsverfahren dadurch, dass Bauteile mit insbesondere stark ortsabhängigen Bauteileigenschaften herstellbar sind. Um diese ortsabhängigen Bauteileigenschaften zu realisieren, werden zumindest zwei Typen von Hohlkugeln mit jeweils unterschiedlichen Eigenschaften, insbesondere mit unterschiedlicher Geometrie und/oder mit unterschiedlichen Werkstoffeigenschaften, jeweils ortsabhängig zugeführt und im Leichtbauelement angeordnet. Damit ergeben sich an den verschiedenen Orten des Leichtbauelements jeweils unterschiedliche Bauteileigenschaften, wie sie sich aus den Eigenschaften der jeweils dort angeordneten Hohlkugeln ergeben. In mechanisch hoch belasteten Bereichen des Bauteils können beispielsweise sehr kleine Hohlkugeln verwendet werden, um eine entsprechend hohe Strukturfestigkeit zu erhalten. Weiterhin ist es beispielsweise denkbar, dass an der Oberfläche des Bauteils besonders reibungsarme oder hoch-temperaturfeste Hohlkugeln angeordnet werden, um entsprechende Belastungen in diesen Bereichen abzufangen. Auch bei Bauteilen ohne ortsabhängiges Anforderungsprofil können selbstverständlich Hohlkugeln mit jeweils unterschiedlichen Eigenschaften, insbesondere mit unterschiedlicher Geometrie und/oder mit unterschiedlichen Werkstoffeigenschaften, eingesetzt werden, um dadurch beispielsweise eine höhere Packungsdichte zu realisieren.

Mit dem erfindungsgemäßen Verfahren können letztendlich beliebige Leichtbauelemente hergestellt werden. Insbesondere ist die Herstellung von Leichtbaublechen mit zwei Deckschichten und einer dazwischen liegenden Hohlkugelstruktur denkbar. Auch zur Herstellung insbesondere von porösen Baukörpern, durch die Flüssigkeiten oder Gase durchgeleitet werden können, kann das Verfahren eingesetzt werden. Weiterhin wird die Herstellung von hochdynamisch eingesetzten Bauteilen, beispielsweise Maschinenschlitten, ermöglicht, da die mit dem erfindungsgemäßen Verfahren hergestellten Bauteile bei hoher Stabilität ein relativ sehr geringes Gewicht aufweisen.

Verschiedene Verfahrensvarianten sind in den Zeichnungen schematisch dargestellt und werden nachfolgend beispielhaft erläutert.

Es zeigen:
- **Fig. 1**: eine Vorrichtung zur Durchführung einer ersten Verfahrensvariante in schematisierter seitlicher Ansicht;
- **Fig. 2**: eine zweite Vorrichtung zur Durchführung einer zweiten Verfahrensvariante in schematisierter seitlicher Ansicht;
- **Fig. 3**: eine Verfahrensvariante zur Nachbearbeitung eines Leichtbauelements;
- **Fig. 4**: eine weitere Verfahrensvariante zur Nachbearbeitung eines Leichtbauelements.

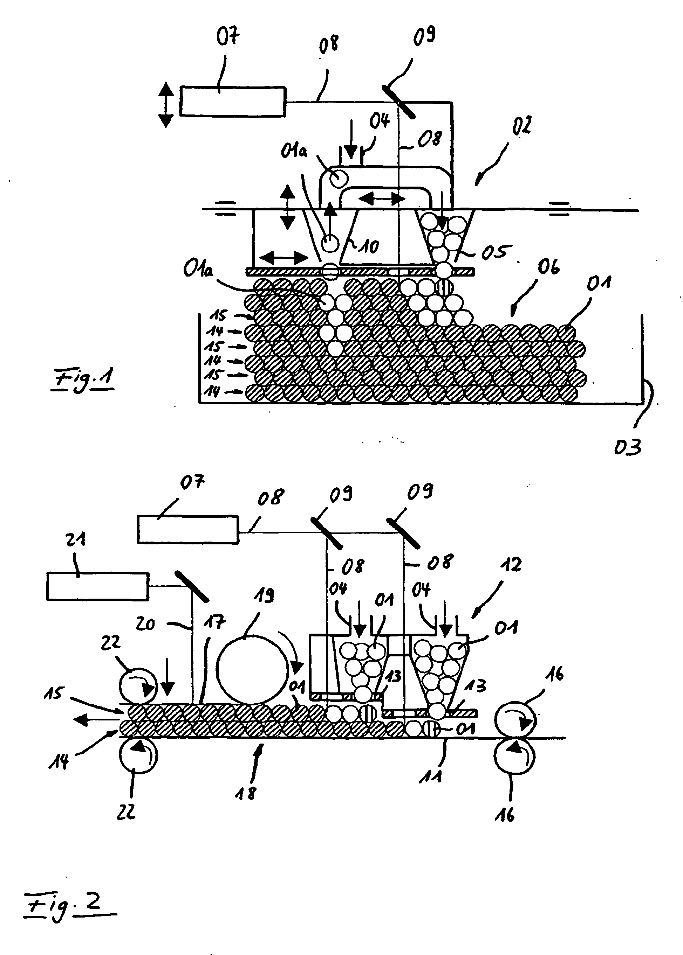

Bei der in Fig. 1 dargestellten Verfahrensvariante werden die Hohlkugeln 01 mittels eines schematisiert dargestellten Zuführgeräts 02 schichtweise durch Relativbewegung auf einem ortsfest angeordneten Trägerelement 03 abgelegt. Das Zuführgerät 02 kann dabei in einer Horizontalebene entlang zweier Stellrichtungen frei verfahren werden. Außerdem kann das Zuführgerät 02 nach vollständiger Platzierung und Fixierung aller Hohlkugeln 01 in einer Schicht 14 bzw. 15 jeweils um eine Schichthöhe vertikal angehoben werden, um nachfolgend die nächsthöhere Schicht 14 bzw. 15 abzulegen.

Die Hohlkugeln 01 werden aus einer in **Fig. 1** nicht dargestellten Vorratseinrichtung durch eine Zuführleitung 04 dem Zuführgerät 02 zugeführt und anschließend mittels einer Lochmaske 05 auf dem Trägerelement 03 bzw. auf den bereits fixierten Hohlkugeln 01 schichtweise abgelegt. Die Lochmaske 05 ist dabei speziell auf die Abmessung der Hohlkugeln 01 und den gewünschten Kugelabstand abgestimmt. Bei jeder neuen Zeile wird die Lochmaske 05 horizontal verfahren, damit die Hohlkugeln 01 entsprechend zeilenweise in ihrer Schicht 14 bzw. 15 abgelegt werden können.

Entsprechend der gewünschten Geometrie eines Leichtbauelements 06 werden die Hohlkugeln 01 aneinander befestigt. Für diese Fixierung der Hohlkugeln 01 wird ein Laser 07 eingesetzt, dessen Laserlichtstrahl 08 mittels einer Umlenkeinrichtung 09 umgelenkt wird. Die Umlenkeinrichtung 09 ist dabei starr an dem Zuführgerät 02 befestigt und wird jeweils entsprechend der Stellbewegung des Zuführgeräts 02 mitbewegt. Der Laserlichtstrahl 08 wird exakt auf die Kontaktstellen zwischen den Kugeln gerichtet, um dort durch die Umwandlung der Laserlichtenergie in Wärmeenergie eine berührungsfreie und verzugsarme Fixierung durch Versintern der aneinander in Kontakt stehenden Stützschalen zu bewirken.

Um im Leichtbauelement 06 Hohlräume bzw. Vertiefungen zu realisieren, werden nicht alle Hohlkugeln 01 miteinander verbunden. Die in **Fig. 1** weiß dargestellten Hohlkugeln 01a wurden nicht mit Laserlicht bestrahlt und sind deshalb auch nicht im Leichtbauelement 06 fixiert. Diese nicht fixierten Hohlkugeln 01 a werden mittels einer Absaugeinrichtung 10, die an der Zuführeinrichtung 02 befestigt ist, nach oben abgesaugt, so dass sich die gewünschten Hohlräume und Vertiefungen ergeben. Die abgesaugten Hohlkugeln 01a gelangen anschließend durch einen Überführungskanal 11 zurück zur Lochmaske 05.

In den Endlagen wird das Zuführgerät 02 um den Abstand eines Kugeldurchmessers nach oben verstellt und der Prozess zur Anordnung und Fixierung der Hohlkugel 01 beginnt von neuem, so dass das Leichtbauelement 06 schichtweise aufgebaut wird. Um Leerbewegungen der Zuführeinrichtung 02 zu vermeiden, besteht dabei die Möglichkeit, dass die Transportrichtung der Hohlkugeln 01 zwischen der Absaugeinrichtung 10 und der Lochmaske 05 umgeschaltet wird, so dass im Ergebnis die Lochmaske 05 dann als Absaugeinrichtung und die Absaugeinrichtung 10 als Lochmaske einsetzbar ist.

Soweit rohrförmige Leichtbauelemente 06 hergestellt werden sollen, können dazu horizontal liegende Walzen als Trägerelemente 03 eingesetzt werden. Durch die relativ große Abmessung der Hohlkugeln 01 von beispielsweise 0,5 mm Durchmesser und größer können im Ergebnis sehr schnell die Leichtbauelemente 06 aufgebaut werden. Da die Wandstärke der vielfach auch beschichteten Hohlkugeln 01 sehr gering ist, werden nur geringe Laserleistungen benötigt. Sollen unterschiedliche Materialien und Abmessungen der einzelnen Hohlkugeln 01 Verwendung finden, können dazu unterschiedliche Lochmasken vorgesehen werden. Diese können beispielsweise über ein Magazin, ähnlich wie bei einem Werkzeugwechsler, automatisiert werden. Es besteht die Möglichkeit, sehr große Bauteilabmessungen bis hin zu ganzen Gestellen und Maschinenbetten herzustellen, da die Leichtbauelemente 06 insgesamt nicht in einem Ofen gebrannt werden müssen. Dabei besteht ein Vorteil von Maschinenbetten aus Hohlkugeln insbesondere in dem großen Dämpfungsvermögen.

In **Fig. 2** ist eine zweite Verfahrensvariante zur Herstellung von Hohlkörperflachteilen schematisiert dargestellt. Auf einer Trägerplatte 11, beispielsweise einem Metallblech, werden mittels eines ortsfest angeordneten Zuführgeräts 12 mit zwei Schlitzblechen 13 die Hohlkugeln 01 zeilenweise unter Bildung zweier Schichten 14 und 15 abgelegt. Die Trägerplatte 11 wird dabei kontinuierlich durch zwei Förderwalzen 16 weitergefördert. Die auf der Trägerplatte 11 angeordneten Hohlkugeln 01 werden mittels eines an zwei Umlenkeinrichtungen 09 umlenkbaren Laserlichtstrahls 08 aus einem Laser 07 fixiert. Je nach Anzahl der Lagen kommen dabei mehr oder weniger Laserlichtquellen und Zuführgeräte zum Einsatz. Die Vorschubbewegung der Trägerplatte 11 kann dabei mit kontinuierlicher Geschwindigkeit oder intermittierend ausgebildet sein.

Nach Fixierung der obersten Schicht 15 wird ein Abdeckelement 17, beispielsweise eine Folie, auf dem dadurch hergestellten Hohlkörperflachteil 18 fixiert. Das Abdeckelement 17 wird dabei von einer Vorratsrolle 19 abgerollt und durch Bestrahlung mit Laserlicht 20 aus einem Laser 21 fixiert. Das Abdeckelement 17 kann dabei zusätzlich auch noch perforiert, gelocht, gehärtet, strukturiert und zum Schluss mit einer Endkontur direkt ausgeschnitten werden. Durch Kalibrierwalzen 22 wird das Hohlkörperflachteil 18 auf eine vorgegebene Schichtdicke kalibriert.

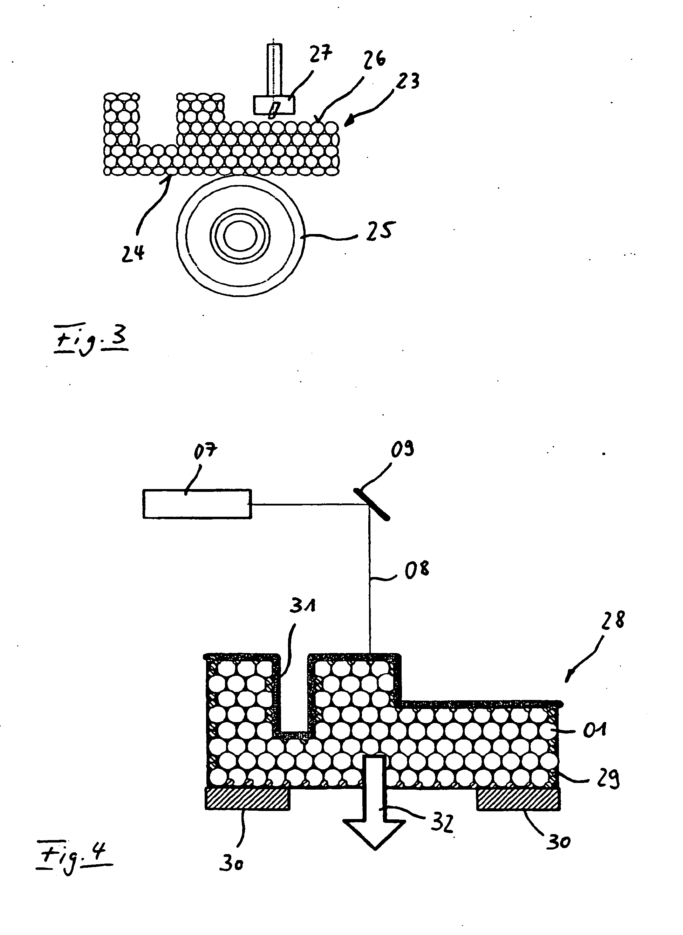

**In** **Fig. 3** sind Verfahrensvarianten zur Verbesserung der Oberflächenstruktur von Hohlkugelformteilen 23 schematisch dargestellt. Eine Möglichkeit besteht darin, dass die Oberfläche 24 des Hohlkugelformteils 23 mit einem rotierenden Drückwerkzeug 25 bearbeitet wird, um durch Deformation der relativ weichen Hohlkugeln 01 eine Glättung zu erreichen. Alternativ bzw. additiv dazu kann die Oberfläche 26 auch mittels eines spanabhebenden Werkzeugs 27, nämlich eines Fräsers, der einen Freiwinkel von 0° aufweist, durch spanende Bearbeitung geglättet werden. Bei rotationssymmetrischen Hohlkugelformteilen ist analog dazu auch eine Drehbearbeitung denkbar.

**In** **Fig. 4** ist die Herstellung eines Hohlkugelformteils 28 mit erhöhten Anforderungen an die Oberflächengüte, Festigkeit und Maßgenauigkeit schematisiert dargestellt. Um die Oberfläche des Hohlkugelformteils 28 zu glätten, werden in die Lücken zwischen den Hohlkugeln 01 kleinere Hohlkugeln 29 eingefügt. Die dann noch verbleibenden Unebenheiten werden mittels Lasersintern, d.h. durch Zugabe von Pulver bei gleichzeitiger Erhitzung mit einem Laserlichtstrahl 08 ausgeglichen.

Durch Auftragsschweißen mit Pulverzusatz bzw. Auftragslöten mit Lötdrahtzufuhr kann örtlich Material, z.B. für die Befestigung von Führungsbahnen 30, schichtweise aufgetragen werden. Die Außenseiten dieser Führungsbahnen 30 können dann später auch noch spanend bearbeitet werden.

Zusätzlich kann eine Folienbeschichtung mit einer Folie 31 vorgenommen werden. Durch Anlegen eines schematisiert dargestellten Unterdrucks 32 kann die Folie 31 in einfacher Weise auf der Oberseite des Hohlkörperformteils 28 angelegt werden. Die Vermittlung des Unterdrucks 32 durch das Hohlkörperformteil 28 wird dabei durch die poröse Bauteilstruktur ermöglicht.

Neben der sehr guten Dämpfungseigenschaften weisen derartige Hohlkörperformteile 28 eine sehr geringe Wärmekapazität und eine damit sehr gute isolierende Wirkung auf. Außerdem können innerhalb der porösen Hohlkörperformteile Gase und Flüssigkeiten transportiert werden. Durch Integration entsprechender Bauteile können Rohrleitungen, Leerrohre oder Schläuche in einfacher Weise durch Einbettung dieser Bauteile in den Hohlkugeln 01 hergestellt werden. Beliebige Einlegeteile können beispielsweise zur Herstellung von Gewinden und Buchsen in das Hohlkörperformteil 28 integriert werden.

Das erfindungsgemäße Herstellungsverfahren ist insbesondere zum Einsatz im Rapid-Proto-Typing zur Herstellung von Prototypen aus Metall, Metalloxiden, Kunststoffen, Verbundwerkstoffen und zum Rapid-Proto-Tooling zur Herstellung von Werkzeugen, insbesondere Schaumwerkzeugen, geeignet.

## Patentansprüche

1. Verfahren zur Herstellung eines Leichtbauelements (06, 18, 23, 28) aus Hohlkugeln (01, 29), wobei die Stützschalen der Hohlkugeln (01, 29) in Kontaktbereichen aneinander zur Anlage kommen und aneinander fixiert werden, wobei zur Bildung des Leichtbauelements (06, 18, 23, 28) die Hohlkugeln (01, 29) durch ein Zuführgerät (02, 12) entsprechend der herzustellenden Geometrie des Leichtbauelements (06, 18, 23, 28) zugeführt und lagerichtig angeordnet werden, wobei einzelne Hohlkugeln (01, 29) und/oder einzelne Gruppen von Hohlkugeln (01, 29) in einem Fixierschritt selektiv erhitzt werden, um die selektiv erhitzten Hohlkugeln (01, 29) durch die Wärmezufuhr an anderen, insbesondere bereits fixierten, Hohlkugeln (01, 29) zu befestigen, wobei die Hohlkugeln (01) zur Bildung des Leichtbauelements (06, 28) schichtweise in Schichten (14, 15) übereinander angeordnet werden,
**dadurch gekennzeichnet,**
**dass** der Fixierschritt während der lagerichtigen Anordnung der Hohlkugeln (01, 29) erfolgt, derart, dass während später zu fixierende Hohlkugeln (01, 29) einer Schicht lagerichtig angeordnet werden, bereits lagerichtig angeordnete Hohlkugeln (01, 29) derselben Schicht fixiert werden.

2. Verfahren nach Anspruch 1,
**dadurch gekennzeichnet,**
**dass** die Hohlkugeln (01, 29) im Kontaktbereich durch die selektive Erhitzung miteinander verschweißt, verlötet, verklebt und/oder versintert werden.

3. Verfahren nach Anspruch 1 oder 2,
**dadurch gekennzeichnet,**
**dass** die Hohlkugeln (01) auf einem Trägerelement (03, 11) angeordnet werden.

4. Verfahren nach Anspruch 3,
**dadurch gekennzeichnet,**
**dass** das Trägerelement (03) unabhängig von der Gestaltung, insbesondere unabhängig von der Form, des Leichtbauelements (06) ausgebildet ist.

5. Verfahren nach Anspruch 3,
**dadurch gekennzeichnet,**
**dass** das Trägerelement (11) Bestandteil des Leichtbauelements (18) ist.

6. Verfahren nach einem der Ansprüche 1 bis 5,
**dadurch gekennzeichnet,**
**dass** die Hohlkugeln (01) durch Relativbewegung zwischen dem Trägerelement (03, 11) und dem Zuführgerät (02, 12) positioniert werden.

7. Verfahren nach Anspruch 6,
**dadurch gekennzeichnet,**
**dass** das Zuführgerät (02) relativ zum ortsfest angeordneten Trägerelement (03) verfahren wird.

8. Verfahren nach Anspruch 6 oder 7,
**dadurch gekennzeichnet,**
**dass** im Zuführgerät (02, 12) eine Lochmaske (05) oder ein Schlitzblech (13) vorgesehen ist, mit dem die Hohlkugeln (01) lagerichtig angeordnet werden können.

9. Verfahren nach einem der Ansprüche 1 bis 5,
**dadurch gekennzeichnet,**
**dass** die Hohlkugeln von einem Zuführgerät als Schüttgut auf das Trägerelement aufgeschüttet werden.

10. Verfahren nach einem der Ansprüche 1 bis 9,
**dadurch gekennzeichnet,**
**dass** die Hohlkugeln (01, 29) einen Kern aus einem expandierten Werkstoff, insbesondere expandiertem Polystyrol, expandiertem Polypropylen oder expandiertem Polyethylen, aufweisen.

11. Verfahren nach einem der Ansprüche 1 bis 10,
**dadurch gekennzeichnet,**
**dass** die Stützschale der Hohlkugeln (01, 29) aus Metall, insbesondere Schwermetall, Buntmetall, Stahl, insbesondere Edelstahl, und/oder aus Metalloxid und/oder aus Keramik und/oder aus Kunststoff besteht.

12. Verfahren nach einem der Ansprüche 1 bis 11,
**dadurch gekennzeichnet,**
**dass** als Energiequelle zur selektiven Erhitzung der Hohlkugeln ein Laser (07) vorgesehen ist.

13. Verfahren nach Anspruch 12,
**dadurch gekennzeichnet,**
**dass** der Laserlichtstrahl (08) gezielt auf einzelne Hohlkugeln (01), insbesondere auf den Kontaktbereich zwischen benachbarten Hohlkugeln (01), und/oder auf einzelne Gruppen von Hohlkugeln (01) gerichtet werden kann.

14. Verfahren nach Anspruch 12 oder 13,
**dadurch gekennzeichnet,**
**dass** der Laser (07) ortsfest montiert ist und der Laserlichtstrahl (08) mit zumindest einer Umlenkeinrichtung (09), insbesondere einem Umlenkspiegel, vom ortsfesten Laser (07) kommend auf die jeweils zu erhitzenden Hohlkugeln (01) umgelenkt wird.

15. Verfahren nach einem des Ansprüche 1 bis 11,
**dadurch gekennzeichnet,**
**dass** als Energiequelle zur selektiven Erhitzung der Hohlkugeln eine Widerstandsschweißvorrichtung vorgesehen ist.

16. Verfahren nach einem der Ansprüche 1 bis 15,
**dadurch gekennzeichnet,**
**dass** die Hohlkugeln (01) zur Bildung einer Schicht (14, 15) zeilenweise nebeneinander angeordnet werden.

17. Verfahren nach einem der Ansprüche 1 bis 16,
**dadurch gekennzeichnet,**
**dass** zur Bildung von Hohlräumen, Ausnehmungen und/oder Vertiefungen einzelne Hohlkugeln (01a) und/oder einzelne Gruppen von Hohlkugeln vor ihrer Fixierung wieder entfernt werden.

18. Verfahren nach Anspruch 17,
**dadurch gekennzeichnet,**
**dass** die zu entfernenden Hohlkugeln (01a) mit einer Absaugeinrichtung (10) durch Anlegen eines Unterdrucks angesaugt werden.

19. Verfahren nach Anspruch 18,
**dadurch gekennzeichnet,**
**dass** die abgesaugten Hohlkugeln (01) direkt in das Zuführgerät (06) zurückgefördert werden.

20. Verfahren nach einem der Ansprüche 1 bis 16,
**dadurch gekennzeichnet,**
**dass** zur Bildung von Hohlräumen, Ausnehmungen und/oder Vertiefungen Platzhalterelemente zwischen den Hohlkugeln angeordnet werden.

21. Verfahren nach Anspruch 20,
**dadurch gekennzeichnet,**
**dass** die Platzhalterelemente aus einem thermisch austreibbaren Werkstoff, insbesondere Polystyrol, hergestellt sind.

22. Verfahren nach Anspruch 20 oder 21,
**dadurch gekennzeichnet,**
**dass** die Platzhalterelemente die im Wesentlichen gleiche Geometrie wie die Hohlkugeln aufweisen.

23. Verfahren nach einem der Ansprüche 1 bis 22,
**dadurch gekennzeichnet,**
**dass** die Hohlkugeln (01) unter Schutzgasatmosphäre erhitzt werden.

24. Verfahren nach einem der Ansprüche 1 bis 23,
**dadurch gekennzeichnet,**
**dass** die Hohlkugeln (01) vor dem Fixieren durch Erhitzung mit einer Vorheizeinrichtung vorgeheizt werden.

25. Verfahren nach einem der Ansprüche 1 bis 24,
**dadurch gekennzeichnet,**
**dass** zur Bildung insbesondere ortsabhängiger Bauteileigenschaften des Leichtbauelements (28) zumindest zwei Typen von Hohlkugeln (01, 29) mit jeweils unterschiedlichen Eigenschaften, insbesondere mit unterschiedlicher Geometrie und/oder mit unterschiedlichen Werkstoffeigenschaften, insbesondere ortsabhängig zugeführt und im Leichtbauelement (28) angeordnet werden.

26. Verfahren nach einem der Ansprüche 1 bis 25,
**dadurch gekennzeichnet,**
**dass** zur Herstellung eines Hohlkugelformkörpers (06) die Hohlkugeln (01) durch Verfahren eines in drei Stellrichtung positionierbaren Zuführgeräts (02) schichtweise auf einem ortsfest angeordneten Trägerelement (03) angeordnet werden, wobei das Zuführgerät (02) nach lagerichtiger Anordnung und Fixierung der Hohlkugeln (01) einer Schicht (14, 15) um eine Schichthöhe angehoben wird, um die nächsthöhere Schicht (14, 15) herzustellen.

27. Verfahren nach einem der Ansprüche 1 bis 25,
**dadurch gekennzeichnet,**
**dass** zur Herstellung eines Hohlkugelflachkörpers (18) auf einem flächigen Trägerelement, insbesondere einer Trägerplatte (11), zumindest eine Schicht (14, 15) Hohlkugeln angeordnet und fixiert wird, wobei auf der obersten Schicht Hohlkugeln (15) ein flächiges Abdeckelement (17) fixiert wird.

28. Verfahren nach Anspruch 27,
**dadurch gekennzeichnet,**
**dass** zur Fixierung des Abdeckelements (17) Teilbereiche des Abdeckelements (17) mit einer Wärmequelle, insbesondere einem Laser (21), aufgeheizt werden.

29. Verfahren nach Anspruch 27 oder 28,
**dadurch gekennzeichnet,**
**dass** als flächiges Trägerelement (11) und/oder als flächiges Abdeckelement (17) ein metallisches Blech- oder Folienmaterial verwendet wird.

30. Verfahren nach Anspruch 27 oder 28,
**dadurch gekennzeichnet,**
**dass** als flächiges Trägerelement und/oder als flächiges Abdeckelement ein Platten- oder Folienmaterial aus Kunststoff verwendet wird.

31. Verfahren nach einem der Ansprüche 27 bis 30,
**dadurch gekennzeichnet,**
**dass** das flächige Trägerelement und/oder das flächige Abdeckelement (17) perforiert ist.

32. Verfahren nach einem der Ansprüche 27 bis 31,
**dadurch gekennzeichnet,**
**dass** der Hohlkugelflachkörper (18) nach Fixierung des flächigen Abdeckelements (17) auf eine vorgegebene Schichtdicke kalibriert wird.

33. Verfahren nach einem der Ansprüche 1 bis 25,
**dadurch gekennzeichnet,**
**dass** die Hohlkugeln mittels eines programmierbaren Handhabungsgeräts, insbesondere mittels eines Industrieroboters, einzeln oder in Gruppen lagerichtig positioniert werden.

34. Verfahren nach einem der Ansprüche 1 bis 33,
**dadurch gekennzeichnet,**
**dass** an zumindest einer von den Hohlkugeln (01) gebildeten Außenseite (24) des Leichtbaueleinents (23) die Stützschalen der Hohlkugeln (1) durch Umformen, insbesondere unter Einsatz eines Drückwerkzeuges (25), bearbeitet, insbesondere geglättet, werden.

35. Verfahren nach einem der Ansprüche 1 bis 34,
**dadurch gekennzeichnet,**
**dass** an zumindest einer von den Hohlkugeln (01) gebildeten Außenseite (26) des Leichtbauelements (23) die Stützschalen der Hohlkugeln (01) durch spanende Bearbeitung, insbesondere durch Fräsen oder Drehen, bearbeitet werden.

36. Verfahren nach einem der Ansprüche 1 bis 35,
**dadurch gekennzeichnet,**
**dass** an zumindest einer von den Hohlkugeln gebildeten Außenseite des Leichtbauelements die Stützschalen der Hohlkugeln durch Anbringung einer Beschichtung, insbesondere einer Sinterschicht, überdeckt werden.

37. Verfahren nach einem der Ansprüche 1 bis 36,
**dadurch gekennzeichnet,**
**dass** das Leichtbauelement im Wesentlichen allseitig von einer eine glatte Oberfläche bildenden Beschichtung umschlossen ist.

38. Verfahren nach einem der Ansprüche 1 bis 37,
**dadurch gekennzeichnet,**
**dass** an zumindest einer von den Hohlkugeln (01, 29) gebildeten Außenseite des Leichtbauelements (28) die Stützschalen der Hohlkugeln (01, 29) durch Anbringung einer Abdeckfolie (31) überdeckt werden.

39. Verfahren nach Anspruch 38,
**dadurch gekennzeichnet,**
**dass** die Abdeckfolie (31) durch Anlegen eines Unterdrucks (32) an der Hohlkugelstruktur des Leichtbauelements (28) angeformt wird.

## Claims

1. A method for producing a light construction element (06, 18, 23, 28) out of hollow balls (01, 29), wherein the supporting shells of said hollow balls (01, 29) in areas of contact rest against each other and are fixed to one another, wherein for forming said light construction element (06, 18, 23, 28) said hollow balls (01, 29) are supplied by means of a feed device (02, 12) corresponding to the geometry to be produced of the light construction element (06, 18, 23, 28) and are arranged in the correct position, wherein individual hollow balls (01, 29) and/or individual groups of hollow balls (01, 29) are selectively heated in a fixing step in order to attach said selectively heated hollow balls (01, 29) by means of heat application to other, in particular already fixed hollow balls (01, 29), wherein said hollow balls (01) for forming said light construction element (06, 28) are stacked on top of each other in layers (14, 15),
**characterized in that**
the fixing step is carried out during the arrangement in the correct position of said hollow balls (01, 29) in such a manner that while hollow balls (01, 29) of one layer, which are to be fixed later, are arranged in the correct position, hollow balls (01, 29) of the same layer, which are already arranged in the correct position, are fixed.

2. The method according to claim 1,
**characterized in that**
said hollow balls (01, 29) through selective heating are fused together, soldered, glued and/or sintered in the area of contact.

3. The method according to claim 1 or 2,
**characterized in that**
said hollow balls (01) are arranged on a support element (03, 11).

4. The method according to claim 3,
**characterized in that**
said support element (03) is formed independent of the design, in particular independent of the form of the light construction element (06).

5. The method according to claim 3,
**characterized in that**
said support element (11) is a component of the light construction element (18).

6. The method according to one of the claims 1 to 5,
**characterized in that**
said hollow balls (01) are positioned by means of the relative movement between said support element (03, 11) and said feed device (02, 12).

7. The method according to claim 6,
**characterized in that**
said feed device (02) is moved relative to said stationary arranged support element (03).

8. The method according to claim 6 or 7,
**characterized in that**
in said feed device (02, 12) an aperture mask (05) or a slotted plate (13) is provided with which said hollow balls (01) are arrangeable in the correct position.

9. The method according to one of the claims 1 to 5,
**characterized in that**
said hollow balls are filled by a feed device as bulk material on said support element.

10. The method according to one of the claims 1 to 9,
**characterized in that**
said hollow balls (01, 29) comprise a core out of an expanded material, in particular, expanded polystyrene, expanded polypropylene or expanded polyethylene.

11. The method according to one of the claims 1 to 10,
**characterized in that**
the supporting shell of said hollow balls (01, 29) consists of metal, in particular heavy metal, non-ferrous heavy metal, steel, in particular stainless steel, and/or metal oxide and/or ceramic and/or plastic.

12. The method according to one of the claims 1 to 11,
**characterized in that**
a laser (07) is provided as an energy source for the selective heating of said hollow balls.

13. The method according to claim 12,
**characterized in that**
the laser light beam (08) is directable to individual hollow balls, in particular to the contact area between adjacent hollow balls (01) and/or to individual groups of hollow balls (01).

14. The method according to claim 12 or 13,
**characterized in that**
said laser (07) is stationary mounted and said laser light beam (08), by means of at least one redirecting device (09), in particular a deflection mirror, coming from said stationary laser (07) is deflected to the respective hollow balls (01) to be heated.

15. The method according to one of the claims 1 to 11,
**characterized in that**
a resistance welding device is provided as an energy source for the selective heating of said hollow balls.

16. The method according to one of the claims 1 to 15,
**characterized in that**
said hollow balls (01) for forming a layer (14, 15) are arranged line by line next to each other.

17. The method according to one of the claims 1 to 16,
**characterized in that**
for forming hollow spaces, recesses and/or cavities individual hollow balls (01a) and/or individual groups of hollow balls are removed again prior to their fixation.

18. The method according to claim 17,
**characterized in that**
said hollow balls (01a) to be removed are withdrawn by suction with a suction device (10) by applying a low pressure.

19. The method according to claim 18,
**characterized in that**
said hollow balls (01) withdrawn by suction are transported directly back to said feed device (06).

20. The method according to one of the claims 1 to 16,
**characterized in that**
for forming hollow spaces, recesses and/or cavities, placeholder elements are arranged between said hollow balls.

21. The method according to claim 20,
**characterized in that**
said placeholder elements are produced from a thermally expellable material, in particular polystyrene.

22. The method according to claim 20 or 21,
**characterized in that**
said placeholder elements comprise substantially the same geometry as said hollow balls.

23. The method according to one of the claims 1 to 22,
**characterized in that**
said hollow balls (01) are heated under inert gas atmosphere.

24. The method according to one of the claims 1 to 23,
**characterized in that,**
said hollow balls (01) are preheated prior to fixation by heating with a preheating device.

25. The method according to one of the claims 1 to 24,
**characterized in that**
for forming in particular location-dependent component properties of said light construction element (28) at least two types of hollow balls (01, 29) with respectively different properties, in particular with different geometry and/or with different material properties, are supplied in particular location-dependent and are arranged in said light construction element (28).

26. The method according to one of the claims 1 to 25,
**characterized in that,**
for producing a hollow ball moulded body (06) said hollow balls (01) are arranged in layers on a fixed support element (03) through the movement of a feed device (02) which is positionable in three positioning directions, wherein, after the arrangement in the correct position and the fixing of the hollow balls (01) of one layer (14, 15), said feed device (02) is raised by one layer height in order to produce the next higher layer (14, 15).

27. The method according to one of the claims 1 to 25,
**characterized in that**
for producing a hollow ball flat body (18) on a flat support element, in particular a support plate (11), at least one layer (14, 15) of hollow balls is arranged and fixed, wherein a flat cover element (17) is fixed on the top layer of hollow balls (15).

28. The method according to claim 27,
**characterized in that**
for the fixing of said cover element (17) portions of said cover element (17) are heated with a heat source, in particular a laser (21).

29. The method according to claim 27 or 28,
**characterized in that**
a metallic sheet or foil material is used as flat support element (11) and/or as flat cover element (17).

30. The method according to claim 27 or 28,
**characterized in that**
a plastic sheet or foil material is used as flat support element and/or as flat cover element.

31. The method according to one of the claims 27 to 30,
**characterized in that**
said flat support element and/or said flat cover element (17) is perforated.

32. The method according to one of the claims 27 to 31,
**characterized in that**
said hollow ball flat body (18) is calibrated to a predefined layer thickness after the fixing of the flat cover element (17).

33. The method according to one of the claims 1 to 25,
**characterized in that**
by means of a programmable handling device, in particular by means of an industrial robot, said hollow balls are positioned individually or in groups in the correct position.

34. The method according to one of the claims 1 to 33,
**characterized in that**
on at least one exterior (24) of said light construction element (23) formed by said hollow balls (01) the supporting shells of said hollow balls (01) are machined, in particular smoothed, by shaping, in particular by using a spinning tool (25)

35. The method according to one of the claims 1 to 34,
**characterized in that**
on at least one exterior (26) of said light construction element (23) formed by said hollow balls (01) the supporting shells of said hollow balls (01) are machined by cutting machining, in particular by milling or turning.

36. The method according to one of the claims 1 to 35,
**characterized in that**
on at least one exterior of said light construction element formed by said hollow balls the supporting shells of the hollow balls are covered by applying a coating, in particular a sintered layer.

37. The method according to one of the claims 1 to 36,
**characterized in that**
said light construction element is enclosed substantially on all sides by a coating forming a smooth surface.

38. The method according to one of the claims 1 to 37,
**characterized in that**
on at least one exterior of said light construction element (28) formed by said hollow balls (01, 29) the supporting shells of said hollow balls (01, 29) are covered by applying a cover foil (31).

39. The method according to claim 38,
**characterized in that**
said cover foil (31) is integrally moulded by applying a low pressure (32) at the hollow ball structure of said light construction element (28).

## Revendications

1. Procédé de fabrication d'un composant léger (06, 18, 23, 28) constitué de billes creuses (01, 29), dans lequel les coques de support des billes creuses (01, 29) viennent reposer les unes sur les autres dans des zones de contact et sont fixées les unes sur les autres, dans lequel afin de former le composant léger (06, 18, 23, 28) les billes creuses (01, 29) sont alimentées par un appareil d'alimentation (01, 29) de manière correspondante à la géométrie à fabriquer du composant léger (06, 18, 23, 28) et sont disposées en position correcte, dans lequel des billes creuses individuelles (01, 29) et/ou des groupes individuels de billes creuses (01, 29) sont chauffés sélectivement dans une étape de fixation, afin de fixer les billes creuses (01, 29) chauffées sélectivement par l'introduction thermique sur d'autres billes creuses (01, 29), notamment déjà fixées, dans lequel les billes creuses (01) sont empilées les une sur les autres en couches (14, 15) afin de former le composant léger (06, 28),
**caractérisé en ce que**
l'étape de fixation a lieu pendant la disposition en position correcte des billes creuses (01, 29), de telle sorte que pendant que des billes creuses (01, 29) d'une couche à fixer ultérieurement sont disposées en position correcte, les billes creuses (01, 29) de la même couche qui sont déjà disposées en position correcte sont fixées.

2. Procédé selon la revendication 1,
**caractérisé en ce que**
les billes creuses (01, 29) sont soudées, collées et/ou frittées les unes aux autres dans la zone de contact du fait du chauffage sélectif.

3. Procédé selon la revendication 1 ou 2,
**caractérisé en ce que**
les billes creuses (01) sont disposées sur un élément de support (03, 11).

4. Procédé selon la revendication 3,
**caractérisé en ce que**
l'élément de support (03) est configuré indépendamment de la configuration, notamment indépendamment de la forme, du composant léger (06).

5. Procédé selon la revendication 3,
**caractérisé en ce que**
l'élément de support (11) est une partie intégrante du composant léger (18).

6. Procédé selon une des revendications 1 à 5,
**caractérisé en ce que**
les billes creuses (01) sont positionnées par un mouvement relatif entre l'élément de support (03, 11) et l'appareil d'alimentation (02, 12).

7. Procédé selon la revendication 6,
**caractérisé en ce que**
l'appareil d'alimentation (02) est déplacé par rapport à l'élément de support (03) disposé de manière fixe.

8. Procédé selon la revendication 6 ou 7,
**caractérisé en ce que**
dans l'appareil d'alimentation (02, 12) un masque à trous (05) ou une tôle à fentes (13) sont prévus, avec lesquels les billes creuses (01) peuvent être disposées en position correcte.

9. Procédé selon une des revendications 1 à 5,
**caractérisé en ce que**
les billes creuses sont déchargées d'un appareil d'alimentation comme une matière en vrac sur l'élément de support.

10. Procédé selon une des revendications 1 à 9,
**caractérisé en ce que**
les billes creuses (01, 29) présentent un noyau en un matériau expansé, notamment du polystyrol expansé, du polypropylène expansé ou du polyéthylène expansé.

11. Procédé selon une des revendications 1 à 10,
**caractérisé en ce que**
la coque de support des billes creuses (01, 29) est constituée de métal, notamment de métal lourd, de métal coloré, d'acier, notamment d'acier inoxydable, et/ou d'oxyde de métal et/ou de céramique et/ou de matière plastique.

12. Procédé selon une des revendications 1 à 11,
**caractérisé en ce que,**
comme source d'énergie en vue du chauffage sélectif des billes creuses, un laser (07) est prévu.

13. Procédé selon la revendication 12,
**caractérisé en ce que**
le rayon de lumière laser (08) peut être orienté de manière ciblée sur des billes creuses (01) individuelles, notamment sur la zone de contact entre des billes creuses voisines, et/ou sur des groupes individuels de billes creuses (01).

14. Procédé selon la revendication 12 ou 13,
**caractérisé en ce que**
le laser (07) est monté de manière stationnaire et le rayon de lumière laser (08) est défléchi avec au moins un dispositif déflecteur (09), notamment un miroir déflecteur, venant du laser stationnaire (07) sur les billes creuses (01) à chauffer respectivement.

15. Procédé selon une des revendications 1 à 11,
**caractérisé en ce que,**
comme source d'énergie pour le chauffage sélectif des billes creuses, un dispositif de soudure à résistance est prévu.

16. Procédé selon une des revendications 1 à 15,
**caractérisé en ce que**
les billes creuses (01) sont disposées en lignes les unes à côtés des autres afin de former une couche (14, 15).

17. Procédé selon une des revendications 1 à 16,
**caractérisé en ce que,**
afin de former des espaces creux, des évidements et/ou des cavités, des billes creuses individuelles (01a) et/ou des groupes individuels de billes creuses sont à nouveau retirés avant leur fixation.

18. Procédé selon la revendication 17,
**caractérisé en ce que**
les billes creuses (01a) à retirer sont aspirées avec un dispositif d'aspiration (10) en appliquant une dépression.

19. Procédé selon la revendication 18,
**caractérisé en ce que**
les billes creuses (01) aspirées sont retransportées directement dans l'appareil d'alimentation (06).

20. Procédé selon une des revendications 1 à 16,
**caractérisé en ce que,**
afin de former des espaces creux, des évidements et/ou des cavités, des éléments d'écarteurs sont disposés entre les billes creuses.

21. Procédé selon la revendication 20,
**caractérisé en ce que**
les éléments d'écarteurs sont fabriqués dans un matériau pouvant être déposé thermiquement, notamment du polystyrol.

22. Procédé selon la revendication 20 ou 21,
**caractérisé en ce que**
les éléments d'écarteurs présentent essentiellement la même géométrie que les billes creuses.

23. Procédé selon une des revendications 1 à 22,
**caractérisé en ce que**
les billes creuses (01) sont chauffées sous une atmosphère de gaz protecteur.

24. Procédé selon une des revendications 1 à 23,
**caractérisé en ce que**
les billes creuses (01) sont préchauffées avant la fixation par chauffage avec un dispositif de préchauffage.

25. Procédé selon une des revendications 1 à 24,
**caractérisé en ce que,**
pour former des propriétés de composant du composant léger (28), notamment des propriétés dépendantes de l'emplacement, au moins deux types de billes creuses (01, 29) avec des propriétés respectives différentes, notamment avec une géométrie différente et/ou des propriétés de matériau différentes, sont alimentés en fonction de l'emplacement et sont disposés dans le composant léger (28).

26. Procédé selon une des revendications 1 à 25,
**caractérisé en ce que,**
afin de fabriquer un corps de billes creuses (06), les billes creuses (01) sont disposées par couches sur un élément de support (03) stationnaire en déplaçant un appareil d'alimentation (02) positionnable dans trois directions, dans lequel l'appareil d'alimentation (02) est soulevé d'une hauteur de couche après la disposition en position correcte et la fixation des billes creuses (01) d'une couche (14, 15), afin de fabriquer la couche la plus haute suivante (14, 15).

27. Procédé selon une des revendications 1 à 25,
**caractérisé en ce que,**
afin de fabriquer un corps plat de billes creuses (18) sur un élément de support plat, notamment une plaque de support (11), au moins une couche (14, 15) de billes creuses est disposée et fixée, dans lequel sur la couche la plus haute de billes creuses (15), un élément de recouvrement plat (17) est fixé.

28. Procédé selon la revendication 27,
**caractérisé en ce que,**
afin de fixer l'élément de recouvrement (17), des zones partielles de l'élément de recouvrement (17) sont chauffées avec une source de chaleur, notamment un laser (21).

29. Procédé selon la revendication 27 ou 28,
**caractérisé en ce que,**
comme élément de support plat (11) et/ou comme élément de recouvrement plat (17), un matériau de tôle ou de feuille métallique est utilisé.

30. Procédé selon la revendication 27 ou 28,
**caractérisé en ce que,**
comme élément de support plat et/ou comme élément de recouvrement plat, un matériau de plaque ou de feuille en matière plastique est utilisé.

31. Procédé selon une des revendications 27 à 30,
**caractérisé en ce que**
l'élément de support plat et/ou l'élément de recouvrement plat (17) sont perforés.

32. Procédé selon une des revendications 27 à 31,
**caractérisé en ce que**
le corps plat de billes creuses (18) est calibré après la fixation de l'élément de recouvrement plat (17) sur une épaisseur de couche prescrite.

33. Procédé selon une des revendications 1 à 25,
**caractérisé en ce que**
les billes creuses sont positionnées en position correcte, individuellement ou en groupes, au moyen d'un appareil de manipulation programmable, notamment au moyen d'un robot industriel.

34. Procédé selon une des revendications 1 à 33,
**caractérisé en ce que,**
sur au moins un côté extérieur (24) du composant léger (23), formé par les billes creuses (01), les coques de support des billes creuses (01) sont usinées, notamment lissées par façonnage, notamment en employant un outil pressurisé (25).

35. Procédé selon une des revendications 1 à 34,
**caractérisé en ce que,**
sur au moins un côté extérieur (26) du composant léger (23), formé par les billes creuses (01), les coques de support des billes creuses (01) sont usinées avec enlèvement de copeaux, notamment par fraisage ou tournage.

36. Procédé selon une des revendications 1 à 35,
**caractérisé en ce que,**
sur au moins un côté extérieur du composant léger, formé par les billes creuses, les coques de support des billes creuses sont recouvertes en appliquant un revêtement, notamment une couche de frittage.

37. Procédé selon une des revendications 1 à 36,
**caractérisé en ce que**
le composant léger est enveloppé essentiellement sur tous ses côtés par un revêtement formant une surface lisse.

38. Procédé selon une des revendications 1 à 37,
**caractérisé en ce que,**
sur au moins un côté extérieur du composant léger (28), formé par les billes creuses (01, 29), les coques de support des billes creuses (01, 29) sont recouvertes en appliquant une feuille de recouvrement (31).

39. Procédé selon la revendication 38,
**caractérisé en ce que**
la feuille de recouvrement (31) est façonnée en appliquant une dépression (32) sur la structure de billes creuses du composant léger (28).
